Europäisches Patentamt

European Patent Office

Office européen des brevets

(11) Veröffentlichungsnummer: **0 513 742 A1**

## (12) EUROPÄISCHE PATENTANMELDUNG

(21) Anmeldenummer: **92108006.5**

(51) Int. Cl.5: **B29C 47/40**

(22) Anmeldetag: **12.05.92**

(30) Priorität: **13.05.91 DE 4115583**

(43) Veröffentlichungstag der Anmeldung:
**19.11.92 Patentblatt 92/47**

(84) Benannte Vertragsstaaten:
**AT BE CH DE DK ES FR GB GR IT LI LU MC
NL PT SE**

(71) Anmelder: **Weber, Johannes, Dr.-Ing.
Johann-Knoch-Gasse 10
W-8640 Kronach(DE)**

(72) Erfinder: **Weber, Johannes, Dr.-Ing.
Johann-Knoch-Gasse 10
W-8640 Kronach(DE)**

(74) Vertreter: **Schaumburg, Thoenes &
Englaender
Mauerkircherstrasse 31 Postfach 86 07 48
W-8000 München 86(DE)**

(54) **Mehrfachschneckenextruder.**

(57) Bei einem Mehrfachschneckenextruder umfassend ein Gehäuse (10) mit mindestens zwei Bohrungen (12, 14) zur Aufnahme je einer Schnecke (16, 18) und einer Antriebsvorrichtung (22) zum Antrieb der Schnecken (16, 18), kämmen die Schnecken (16, 18) nur in einem Teilabschnitt (32) ihres jeweils mit einem Schneckensteg (30, 34) versehenen Arbeitsbereiches miteinander.

Fig. 1

Die Erfindung betrifft einen Mehrfachschnekkenextruder nach dem Oberbegriff des Anspruchs 1.

Mehrfachschneckenextruder der vorstehend genannten Art sind in den vielfältigsten Ausführungsformen bekannt, wobei es sowohl Ausführungsformen gibt, bei denen sich die Mantelflächen der Schnecken nur berühren, als auch solche Ausführungsformen existieren, bei denen die Schnekken auf ihrer gesamten Arbeitslänge in Eingriff miteinander stehen. Den Besonderheiten des Materials während des Verarbeitungsprozesses wird dabei häufig durch eine unterschiedliche Steigung und Höhe des Schneckensteges sowie die Anzahl der Gänge über die gesamte Arbeitslänge der Schnecken Rechnung getragen.

Der Erfindung liegt die Aufgabe zugrunde, das Plastifizieren des Materials einerseits und das Austragen des Materials andererseits unabhängig voneinander optimieren zu können.

Diese Aufgabe wird erfindungsgemäß durch die im Anspruch 1 angegebenen Merkmale gelöst.

In dem Arbeitsbereich, in dem die Schneckenabschnitte nicht miteinander kämmen, wird vorwiegend eine Plastifizierung des Materials erreicht, wobei man durch die Gestaltung des Gangprofils und der Schneckensteghöhe dem zu verarbeitenden Material besonders Rechnung tragen kann. In dem Arbeitsbereich, in dem die Schnecken kämmen, liegt das Schwergewicht auf der Durchmischung und der Förderung des Materials sowie dem Druckaufbau im Material. Dabei ist es besonders zweckmäßig, wenn die nichtkämmenden Teilabschnitte in dem der Austragsöffnung des Gehäuses fernen Einzugsbereich des Extruders und die kämmenden Teilabschnitte in dem Austragsbereichs liegen.

Die Schneckenwellen können dabei gegenläufig oder gleichsinnig antreibbar sein. Auch können bei dem erfindungsgemäßen Extruder die Achsen der Schneckenwellen parallel oder unter einem Winkel zueinander gerichtet sein, wobei auch mehr als zwei Wellen vorgesehen sein können. Die erfindungsgemäße Lösung bietet die Möglichkeit, beispielsweise unterschiedliche Materialien zunächst individuell zu plastifizieren, wobei durch die individuelle Gestaltung des Gangprofiles der Schnecke den jeweiligen Eigenschaften des Materials Rechnung getragen werden kann. Die verschiedenen Materialien werden dann erst in dem Austragsbereich des Extruders zusammengeführt und von den miteinander kämmenden Schneckenbereichen durchmischt und durch die Austragsöffnung gefördert.

Die erfindungsgemäße Lösung bietet damit die Möglichkeit, den Plastifizierungsvorgang und den Austragsvorgang jeweils zumindest zum Teil getrennt voneinander zu optimieren, wobei bei einem Mischmaterial der Plastifizierungsvorgang gegebenenfalls sogar auf die besonderen Eigenschaften der zu verarbeitenden Komponenten abgestimmt werden kann.

Die folgende Beschreibung erläutert in Verbindung mit den beigefügten Zeichnungen die Erfindung anhand eines Ausführungsbeispiels. Es zeigen:

Fig. 1      einen schematischen Längsschnitt durch ein Extrudergehäuse mit parallel zueinander gerichteten Schnecken,

Fig. 2      einen Schnitt entlang Linie II-II in Figur 1,

Fig. 3      einen Schnitt entlang Linie III-III in Figur 1,

Fig. 4      einen der Figur 1 entsprechenden schematischen Schnitt durch ein Extrudergehäuse mit unter einem Winkel zueinander gerichteten Schnecken und

Fig. 5 und 6      jeweils einen Schnitt entlang den Linien V-V bzw. VI-VI in Figur 4.

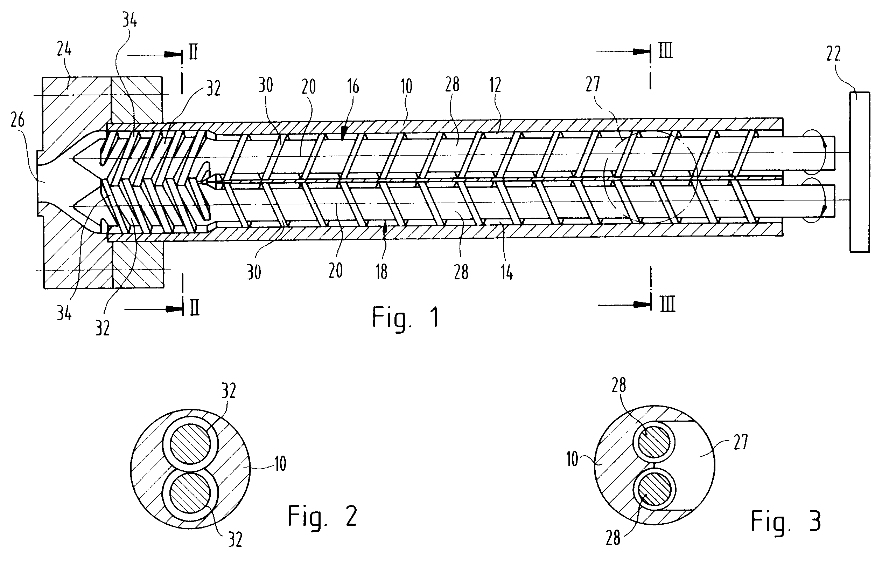

Der in Figur 1 schematisch dargestellte Extruder umfaßt ein Gehäuse 10 mit zwei Bohrungen 12 und 14, in denen sich jeweils eine Schneckenwelle 16 bzw. 18 befindet, wobei die Achsen 20 der beiden Schneckenwellen 16 und 18 parallel zueinander gerichtet sind. Die Schneckenwellen 16 und 18 sind über eine nur schematisch angedeutete Antriebsvorrichtung 22 antreibbar, wobei im dargestellten Ausführungsbeispiel der Drehsinn der beiden Schnecken gegenläufig ist. Das Gehäuse 10 umfaßt einen Austragsabschnitt 24 mit einer Austragsöffnung 26, an die sich dann eine beliebige Form anschließen kann.

Nahe dem der Austragsöffnung 26 fernen Ende des Gehäuses ist eine Einlaßöffnung 27 zum Einführen des zu verarbeitenden Materials vorgesehen.

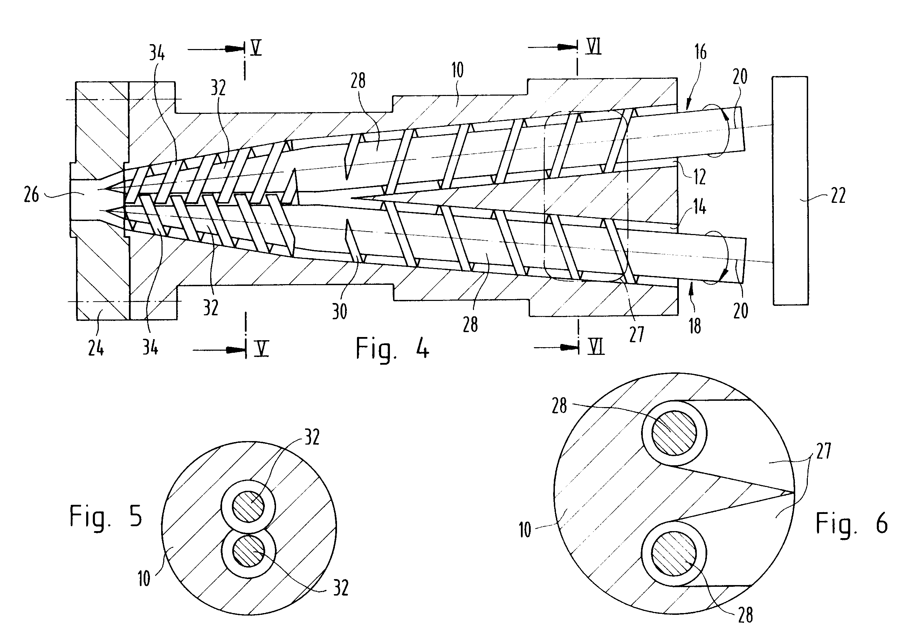

Wie man aus den Figuren 1 bis 3 erkennt, umfassen die Schnecken 16 und 18 jeweils einen längeren ersten Abschnitt 28, in dem die Schnekkenstege 30 nicht in Eingriff miteinander treten, d.h. die Schnecken 16 und 18 nicht kämmen. In diesem Bereich wird das durch die Öffnung 27 zugeführte Material aufgeschlossen und plastifiziert. Hieran schließt sich zur Austragsöffnung 26 hin ein Teilbereich 32 an, in dem die Schnecken 16, 18 kämmen, d.h. in dem die Schneckenstege 34 in Eingriff miteinander treten. Dieser Bereich dient der Durchmischung und dem Druckaufbau in dem Material, um dieses durch die Austragsöffnung 26 auszupressen. Der kämmende Bereich und der nicht-kämmende Bereich sind den Schnittzeichnungen in den Figuren 2 bzw. 3 deutlich zu entnehmen.

Die Figuren 4 bis 6 zeigen eine weitere Ausführungsformder Erfindung, die sich von der ersten dadurch unterscheidet, daß die Achsen 20 der Schnecken einen spitzen Winkel miteinander bilden. Gleiche Teile sind mit den selben Bezugszeichen wie bei der Ausführungsform gemäß den Figuren 1 bis 3 bezeichnet.

In dem Einzugsbereich sind wie bei der Ausführungsform gemäß den Figuren 1 bis 3 die Bohrungen 12 und 14 zur Aufnahme der Schnecken 16 bzw. 18 voneinander getrennt. Dies bietet die Möglichkeit, beispielsweise bei der Verarbeitung einer Materialmischung die zu verarbeitenden Komponenten zunächst getrennt entsprechend den jeweiligen Materialeigenschaften zu plastifizieren und dann erst im Austragsteil, in dem die konisch gestalteten Endabschnitte 32 und 34 der Schnecken 16 bzw. 18 miteinander kämmen, zu durchmischen und durch die Öffnung 26 auszutragen. Hierzu können auch die Schneckenstege, die in beiden Ausführungsformen für beide Schnecken identisch dargestellt sind, hinsichtlich ihres Gangprofiles unterschiedlich gestaltet sein.

Anstelle des gegensinnigen Antriebs der beiden Schneckenwellen, wie er bei den dargestellten Ausführungsformen angedeutet ist, kann der Antrieb der beiden Schnecken natürlich auch gleichsinnig erfolgen.

## Patentansprüche

1. Mehrfachschneckenextruder umfassend ein Gehäuse (10) mit mindestens zwei Bohrungen (12, 14) zur Aufnahme je einer Schnecke (16, 18) und einer Antriebsvorrichtung (22) zum Antrieb der Schnecken (16, 18), dadurch **gekennzeichnet**, daß die Schnecken (16, 18) nur in einem Teilabschnitt (32) ihres jeweils mit einem Schneckensteg (30, 34) versehenen Arbeitsbereiches miteinander kämmen.

2. Mehrfachschneckenextruder nach Anspruch 1, dadurch **gekennzeichnet**, daß die nicht-kämmenden Teilabschnitte (28) in dem der Austragsöffnung (26) des Gehäuses (10) fernen Einzugsbereich des Extruders und die kämmenden Teilabschnitte (32) in dem Austragsbereich liegen.

3. Mehrfachschneckenextruder nach Anspruch 1 oder 2, dadurch **gekennzeichnet**, daß die Schnecken (16, 18) gegenläufig antreibbar sind.

4. Mehrfachschneckenextruder nach Anspruch 1 oder 2, dadurch **gekennzeichnet**, daß die Schnecken (16, 18) gleichsinnig antreibbar sind.

5. Mehrfachschneckenextruder nach einem der Ansprüche 1 bis 4, dadurch **gekennzeichnet**, daß die Achsen (20) der Schnecken (16, 18) parallel zueinander gerichtet sind.

6. Mehrfachschneckenextruder nach einem der Ansprüche 1 bis 4, dadurch **gekennzeichnet**, daß die Achsen (20) der Schnecken (16, 18) unter einem Winkel zueinander zueinander gerichtet sind.

7. Mehrfachschneckenextruder nach einem der Ansprüche 1 bis 6, dadurch **gekennzeichnet**, daß die Schnecken (16, 18) in ihren nicht-kämmenden Teilabschnitten (28) hinsichtlich Steigung und Höhe des Schneckensteges (30) unterschiedlich ausgebildet sind.

Fig. 1

Fig. 2

Fig. 3

Fig. 4

Fig. 5

Fig. 6

<table>
</table>

| | Europäisches Patentamt | **EUROPÄISCHER RECHERCHENBERICHT** | Nummer der Anmeldung |
|---|---|---|---|

EP    92 10 8006

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | GB-A-1 595 965 (K.R. MATTHEWS & CO.)<br>* Seite 3, linke Spalte, Zeile 52 - rechte Spalte, Zeile 78; Abbildungen *<br>--- | 1-7 | B29C47/40 |
| X | US-A-2 942 294 (H. REIFENHÄUSER)<br>* Spalte 2, Zeile 30 - Zeile 39; Abbildung 2 *<br>--- | 1-5 | |
| X | DE-A-1 274 797 (ZIMMERMANN & JANSEN)<br>* Spalte 1, Zeile 33 - Zeile 43; Abbildungen *<br>--- | 1,5 | |
| X | US-A-4 943 402 (F.Y. KAFKA ET AL.)<br>* Spalte 5, Zeile 18 - Zeile 25; Abbildung 2 *<br>--- | 1,5 | |
| A | DE-A-2 249 328 (WERNER & PFLEIDERER)<br>* Spalte 3, Zeile 56 - Zeile 65; Abbildungen 1-3 *<br>* Spalte 4, Zeile 42 - Zeile 49; Abbildungen 4,5 *<br><br>----- | 1,3,5 | |
| | | | **RECHERCHIERTE SACHGEBIETE (Int. Cl.5)**<br><br>B29C<br>B29B |

Der vorliegende Recherchenbericht wurde für alle Patentansprüche erstellt

| Recherchenort | Abschlußdatum der Recherche | Prüfer |
|---|---|---|
| DEN HAAG | 27 AUGUST 1992 | TOPALIDIS A. |

EPO FORM 1503 03.82 (P0403)